# FASCICULE DE BREVET EUROPEEN

(11) **EP 2 551 534 B1**
(45) Date de publication et mention de la délivrance du brevet: **27.11.2013**
(21) Numéro de dépôt: 11175567.4
(22) Date de dépôt: 27.07.2011
(51) Int. Cl.: F16B 12/20, F16B 7/04

(54) **Élément d'assemblage et meuble en kit comprenant un tel élément d'assemblage**
Montageelement und Möbelbausatz, der ein solches Element umfasst
Assembly element and piece of furniture in kit form that includes such an assembly element

(43) Date de publication de la demande: 30.01.2013
(73) Titulaire: Platre, David, 69150 Decines Charpieu (FR); Leroo, Grégory Jean-Bernard, 7700 Mouscron (BE)
(72) Inventeur: Platre, David, 69150 Décines Charpieu (FR)
(74) Mandataire: Chevalier, Renaud Philippe

(56) Documents cités:
- DE-C1- 10 156 222
- DE-U1- 9 420 832

## Description

La présente invention concerne un élément d'assemblage, par exemple pour assembler des composants de meuble. Par ailleurs, la présente invention concerne un meuble en kit comprenant au moins un tel élément d'assemblage.

La présente invention trouve notamment application dans le domaine de la fabrication et de la construction de meubles, ainsi que dans tout domaine nécessitant un assemblage rapide et durable entre deux composants.

EP1211428A1 décrit un élément d'assemblage pour assembler une armature de meuble et comprenant un organe de liaison allongé présentant une gorge annulaire et un pointeau de serrage adapté pour être vissé dans un trou taraudé et pour pénétrer dans la gorge annulaire au cours du vissage de l'élément de serrage dans le trou taraudé, de façon à assembler les composants.

Cependant, un tel élément d'assemblage est difficile à mettre en place dans les cavités des composants qui reçoivent les différentes parties de l'élément d'assemblage. En outre, un tel élément d'assemblage réalise un assemblage peu ferme ou peu résistant, si bien que le meuble ne peut pas supporter des efforts élevés sans risquer de se désassembler. DE 9420832U décrit un autre élément d'assemblage.

La présente invention vise notamment à résoudre, en tout ou partie, les problèmes mentionnés ci-avant.

A cet effet, l'invention a pour objet un élément d'assemblage, par exemple pour assembler un premier composant et un deuxième composant appartenant à un meuble, tels que des carrelets, l'élément d'assemblage comprenant :
- au moins un organe de liaison ayant une forme allongée suivant un axe de liaison, l'organe de liaison présentant une première portion dite de serrage destinée à s'étendre dans une première cavité réalisée dans le premier composant, la portion de serrage présentant au moins une gorge primaire, l'organe de liaison présentant une deuxième portion dite d'ancrage destinée à s'étendre dans une deuxième cavité réalisée dans le deuxième composant ;
- au moins un membre de guidage présentant un logement, dans lequel la portion de serrage peut coulisser suivant l'axe de liaison, et un trou taraudé s'étendant suivant un axe de taraudage orthogonal à l'axe de liaison, de préférence perpendiculaire à l'axe de liaison ; et
- au moins un élément de serrage adapté pour être vissé dans le trou taraudé, l'élément de serrage présentant une extrémité en saillie ayant, en section suivant un plan défini par l'axe de liaison et par l'axe de taraudage, une forme globalement complémentaire à la gorge primaire de sorte que l'extrémité en saillie pénètre dans la gorge primaire au cours du vissage de l'élément de serrage dans le trou taraudé ;
l'élément d'assemblage étant caractérisé en ce qu'il comprend en outre au moins un élément déformable agencé sur l'organe de liaison de façon à porter d'une part, contre au moins une surface de butée agencée sur l'organe de liaison pour arrêter l'élément déformable en translation parallèlement à l'axe de liaison, et d'autre part, contre le membre de guidage, de sorte que l'élément déformable présente une expansion suivant des directions dites radiales, qui sont orthogonales à l'axe de liaison, lorsqu'un vissage de l'élément de serrage entraîne le membre de guidage en translation, parallèlement à l'axe de liaison et en direction de la portion d'ancrage.

En d'autres termes, l'élément de serrage exerce des efforts de traction sur l'organe de liaison, suivant l'axe de liaison et par l'intermédiaire de la gorge primaire, pendant que l'élément déformable réalise son expansion radiale.

Ainsi, les efforts de traction permettent de presser les composants l'un contre l'autre et donc de les assembler. Au début de son expansion radiale, l'élément déformable permet de centrer l'organe de liaison dans les première et deuxième cavités et d'améliorer le glissement l'organe de liaison sur le bois ou les autres matières. Puis, à la fin de son expansion radiale, l'élément déformable répartit des efforts radiaux sur les parois de la première cavité, ce qui confère à l'assemblage une cohésion élevée. De plus, cette expansion radiale permet de réaliser avec une grande tolérance le perçage de la première cavité dans le bois ou autres matières.

En outre, l'élément déformable en butée permet de limiter l'introduction de l'organe de liaison dans la première cavité, ce qui facilite le montage de l'élément d'assemblage par un utilisateur n'ayant que peu de connaissances dans le domaine du meuble ou de la mécanique. Ainsi, un élément d'assemblage peut être destiné au grand public.

Selon un mode de réalisation de l'invention, la portion d'ancrage comprend une platine solidaire de l'organe de liaison et adaptée pour coulisser dans une rainure ménagée dans le deuxième composant, la platine étant solidarisée à la portion de serrage par au moins une tige.

Ainsi, une telle portion d'ancrage permet d'assembler un composant rainure à un composant avec un alésage pour le membre de guidage et un perçage formant la première cavité.

Selon un mode de réalisation de l'invention, au moins une face de la platine est globalement plane et forme avec l'axe de liaison un angle compris entre 20° et 90°, par exemple un angle de 30°, de 45°, de 60° ou de 90°.

Ainsi, une telle platine permet d'assembler deux composants présentant diverses orientations, en particulier deux composants obliques. Lorsque l'angle est inférieur à 90°, l'organe de liaison présente un coude ou une courbure.

Selon un mode de réalisation de l'invention, l'élément d'assemblage comprend en outre un membre de guidage supplémentaire et un élément de serrage supplémentaire, la portion d'ancrage présentant au moins une gorge secondaire adaptée pour recevoir l'extrémité en saillie de l'élément de serrage supplémentaire, le membre de guidage supplémentaire présentant un logement supplémentaire dans lequel la portion d'ancrage peut coulisser suivant l'axe de liaison.

Ainsi, le membre de guidage supplémentaire et l'élément de serrage supplémentaire permettent d'assembler deux composants alésés, mais pas nécessairement rainurés.

Selon un mode de réalisation de l'invention, lorsque l'élément déformable est au repos :
un premier écart, mesuré parallèlement à l'axe de liaison, entre, d'une part, la surface de l'élément déformable destinée à porter contre le membre de guidage et, d'autre part, le bord de la gorge primaire le plus éloigné de l'élément déformable
est supérieur à
un deuxième écart, mesuré parallèlement à l'axe de liaison, entre l'extrémité en saillie et la partie du membre de guidage destinée à porter contre l'élément déformable.

Ainsi, l'extrémité en saillie est positionnée correctement par rapport à la gorge primaire, ce qui rend simple, donc rapide, le vissage de l'élément de serrage contre l'organe de liaison par un utilisateur. En effet, l'utilisateur ne peut pas rentrer l'organe de liaison dans le logement au-delà de l'élément déformable.

Selon un mode de réalisation de l'invention, le rapport ayant pour numérateur le premier écart et pour dénominateur le deuxième écart est compris entre 1,1 et 2, de préférence entre 1,3 et 1,8.

Ainsi, le vissage de l'élément de serrage contre l'organe de liaison par un utilisateur est particulièrement simple, donc rapide, et il ne requiert aucun savoir-faire particulier.

Selon un mode de réalisation de l'invention, l'extrémité en saillie pénètre dans la gorge primaire lorsque l'élément de serrage a réalisé, dans le trou taraudé, un nombre de tours inférieur ou égal à trois, de préférence inférieur ou égal à deux. En d'autres termes, l'élément de serrage est engagé dans un nombre de filets compris entre un et trois.

Ainsi, un tel élément d'assemblage rend simple, donc rapide, le positionnement de l'éxtrémité en saillie par rapport à la gorge primaire et suivant l'axe du taraudage, donc orthogonalement à l'axe de liaison.

Selon un mode de réalisation de l'invention, l'organe de liaison présente une symétrie de révolution autour de l'axe de liaison.

Ainsi, la position angulaire de l'organe de liaison autour de l'axe de liaison est indifférente, ce qui rend simple, donc rapide, l'assemblage par un utilisateur.

Selon un mode de réalisation de l'invention, la surface de butée est formée par un épaulement, dont le diamètre externe est approximativement égal au diamètre externe de l'élément déformable.

Ainsi, un tel épaulement forme une surface de butée simple à usiner sur l'organe de liaison.

Selon un mode de réalisation de l'invention, l'élément déformable comprend un manchon réalisé en un matériau élastomère, de préférence sélectionné dans le groupe constitué d'un polymère souple et d'un élastomère synthétique ou naturel, tel que le caoutchouc, le manchon étant adapté pour entourer une partie périphérique de l'organe de liaison.

Ainsi, un tel manchon permet de répartir autour de l'axe de liaison l'expansion radiale de l'élément déformable, ce qui facilite son centrage.

Selon un mode de réalisation de l'invention, le manchon a une base circulaire, le manchon entourant une partie cylindrique de l'organe de liaison.

Ainsi, un tel manchon permet de répartir uniformément autour de l'axe de liaison l'expansion radiale de l'élément déformable.

Selon un mode de réalisation de l'invention, l'extrémité en saillie présente une symétrie de révolution autour de l'axe de taraudage, l'extrémité en saillie ayant de préférence une forme sélectionnée dans le groupe constitué d'un cône ou d'un tronc de cône dont le demi-angle au sommet peut être compris entre 80 degrés et 120 degrés, d'une calotte sphérique, d'une calotte ellipsoïdale, et dans lequel la gorge primaire a respectivement globalement la forme d'un anneau, de préférence d'un tore, dont la section suivant un plan méridien a un contour sélectionné dans le groupe constitué d'un triangle de forme complémentaire ou non au cône ou tronc de cône, d'un trapèze, d'un arc de cercle, d'un segment d'ellipse.

Selon une variante de l'invention, l'extrémité en saillie et la gorge primaire sont réalisées à partir de matériaux traités de sorte que leurs états de surface résistent à des efforts de compression élevés. Ainsi, l'extrémité en saillie et la gorge primaire ne présentent aucune déformation lors du montage et du serrage d'un élément d'assemblage conforme à l'invention.

Ainsi, de telles formes permettent d'exercer efficacement les efforts de traction de l'élément de serrage sur l'organe de liaison.

Dans la présente demande, le terme « plan méridien » désigne un plan quelconque comprenant l'axe de liaison.

Selon un mode de réalisation de l'invention, le membre de guidage a une surface externe globalement cylindrique à base circulaire, et la surface de l'élément déformable destinée à porter contre le membre de guidage est globalement plane lorsque l'élément déformable est au repos.

Ainsi, une telle surface externe rend indifférente la position angulaire du membre de guidage, ce qui facilite sa mise en place dans le premier composant par un utilisateur.

Selon un mode de réalisation de l'invention, l'élément de serrage présente une tête à empreinte, l'empreinte étant de préférence formée d'un usinage cylindrique hexagonal creux (CHC).

Ainsi, une telle tête à empreinte ne représente pas d'encombrement, ce qui rend l'élément de serrage compact.

Selon une variante de l'invention, le filetage de l'élément de serrage est de type M10. Ainsi, l'élément de serrage peut exercer des efforts de serrage appropriés dans le domaine de la construction de meubles.

Selon une variante de l'invention, la portion d'ancrage comporte une partie articulée. Ainsi, une telle partie articulée permet d'adapter l'élément d'assemblage à deux composants obliques.

Par ailleurs, la présente invention a pour objet un meuble en kit, comprenant un premier composant et un deuxième composant, tels que des carrelets, et au moins un élément d'assemblage selon l'une des revendications précédentes, le premier composant et le deuxième composant étant assemblés au moyen d'un élément d'assemblage respectif, le premier composant présentant une première cavité dans laquelle peut s'étendre la portion de serrage, le deuxième composant présentant une deuxième cavité dans laquelle s'étend la portion d'ancrage, le premier composant présentant en outre un alésage dans lequel s'étend le membre de guidage.

Ainsi, **un tel meuble en kit permet un** assemblage particulièrement simple, donc rapide, par un utilisateur. Le premier composant ou le deuxième composant peut être formé d'un panneau, d'une planche, d'un carrelet ou autre élément structurel composant une armature de meuble.

Un élément d'assemblage conforme à l'invention peut aussi être appliqué pour assembler des composants de luminaire, de cloisonnement, d'objets décoratifs et de tout autre objet d'agencement domestique ou industriel.

Les modes de réalisation et les variantes mentionnés ci-avant peuvent être pris isolément ou selon toute combinaison techniquement admissible.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective éclatée d'un élément d'assemblage conforme à un premier mode de réalisation de l'invention ;
- la figure 2 est une vue en perspective de l'élément d'assemblage de la figure 1 à l'état monté ;
- la figure 3 est une vue en perspective d'une pièce de l'élément d'assemblage de la figure 1 ;
- la figure 4 est une vue en perspective d'une autre pièce de l'élément d'assemblage de la figure 1, à l'état de repos ;
- la figure 5 est une vue en coupe suivant le plan V à la figure 2 de l'élément d'assemblage de la figure 1, à l'état desserré ;
- la figure 6 est une vue similaire à la figure 5 de l'élément d'assemblage de la figure 1 en cours de serrage ;
- la figure 7 est une vue similaire à la figure 5 de l'élément d'assemblage de la figure 1 à l'état serré ;
- la figure 8 est une vue similaire à la figure 1 d'un élément d'assemblage conforme à un deuxième mode de réalisation de l'invention ;
- la figure 9 est une vue similaire à la figure 2 de l'élément d'assemblage de la figure 8 à l'état monté ;
- la figure 10 est une vue en perspective de deux composants appartenant à un meuble conforme à un premier mode de réalisation de l'invention et assemblés au moyen de l'élément d'assemblage de la figure 1 ;
- la figure 11 est une vue en perspective, tronquée suivant le plan XI à la figure 10, des deux composants de la figure 10 ;
- la figure 12 est une coupe suivant le plan XI à la figure 10, illustrant l'élément d'assemblage de la figure 1 à l'état desserré ;
- la figure 13 est une vue similaire à la figure 12 illustrant l'élément d'assemblage de la figure 1 à l'état serré ;
- la figure 14 est une vue similaire à la figure 10 illustrant deux composants appartenant à un meuble conforme à un deuxième mode de réalisation de l'invention et assemblés au moyen de l'élément d'assemblage de la figure 8 ;
- la figure 15 est une vue en perspective, tronquée suivant le plan XV à la figure 14, des deux composants de la figure 14 ;
- la figure 16 est une coupe suivant le plan XV à la figure 14, illustrant l'élément d'assemblage de la figure 8 à l'état desserré ;
- la figure 17 est une vue similaire à la figure 16 illustrant l'élément d'assemblage de la figure 8 à l'état serré ;
- la figure 18 est une vue similaire à la figure 2 illustrant un élément d'assemblage conforme à un troisième mode de réalisation de l'invention ;
- la figure 19 est une vue similaire à la figure 8 illustrant un élément d'assemblage conforme à un quatrième mode de réalisation de l'invention ;
- la figure 20 est une vue similaire à la figure 2 illustrant un élément d'assemblage conforme à un cinquième mode de réalisation de l'invention ;
- la figure 21 est une vue similaire à la figure 2 illustrant un élément d'assemblage conforme à un sixième mode de réalisation de l'invention ;
- la figure 22 est une vue similaire à la figure 10 illustrant deux composants appartenant à un meuble conforme à un septième mode de réalisation l'invention et assemblés au moyen de l'élément d'assemblage de la figure 20 ou 21 ; et
- la figure 23 est une vue similaire à la figure 2 illustrant un élément d'assemblage conforme à un huitième mode de réalisation de l'invention.

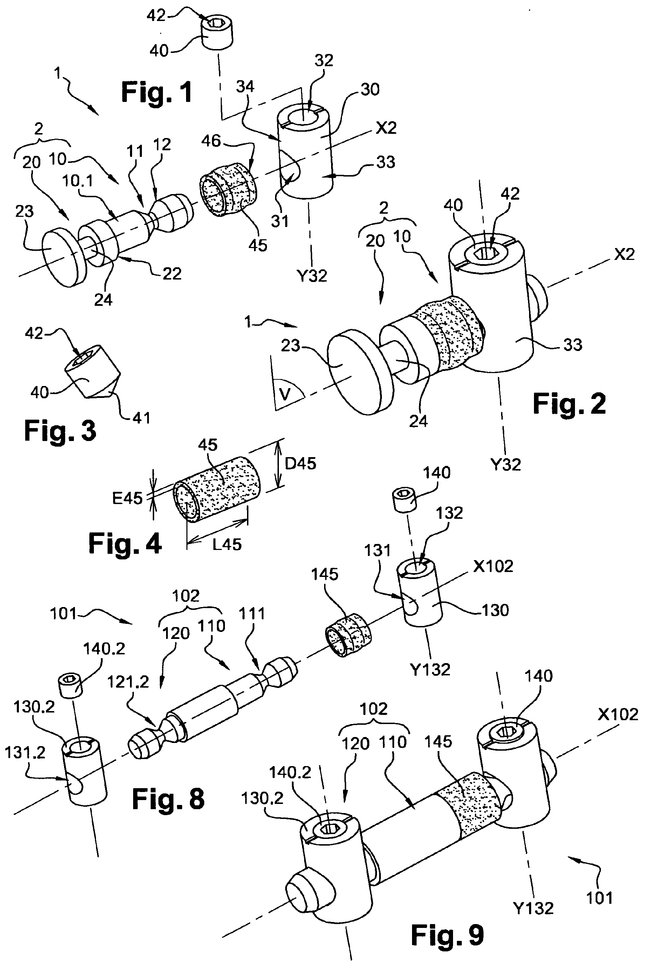

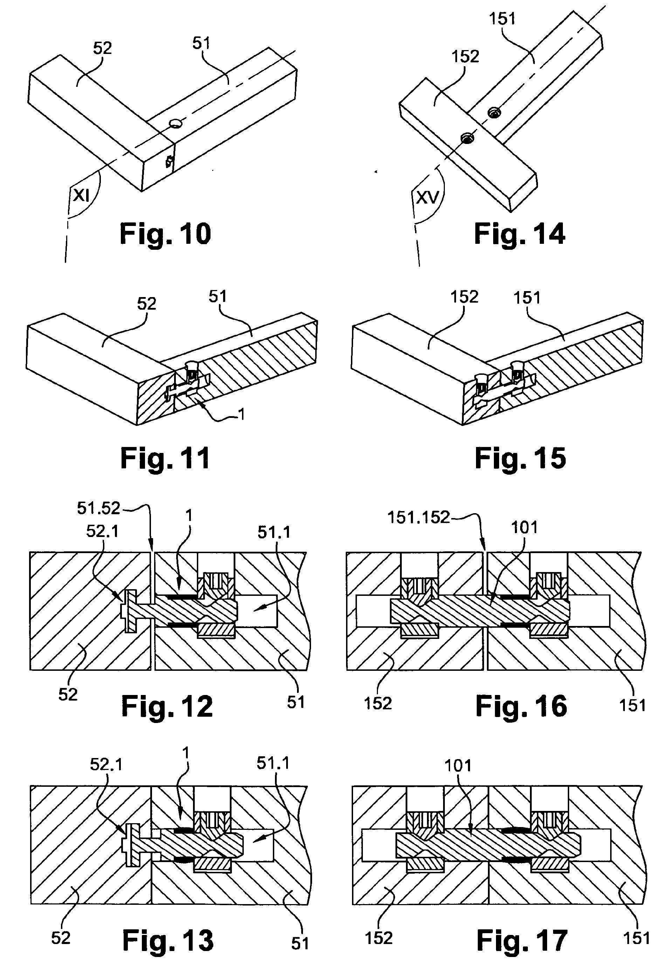

La figure 1 illustre un élément d'assemblage 1, pour assembler un premier composant 51 et un deuxième composant 52 qui appartiennent à un meuble non représenté et qui sont décrits ci-après en relation avec les figures 10 à 13. Le premier composant 51 et le deuxième composant 52 peuvent être des carrelets en bois.

L'élément d'assemblage 1 comprend un organe de liaison 2 ayant une forme allongée suivant un axe de liaison X2. Dans l'exemple des figures 1 et 2, l'organe de liaison 2 présente une symétrie de révolution autour de l'axe de liaison X2. En particulier, l'organe de liaison 2 a une forme globalement cylindrique à base circulaire.

L'organe de liaison 2 présente une première portion dite de serrage 10 qui est destinée à s'étendre dans une première cavité réalisée dans le premier composant 51. L'organe de liaison 2 présente en outre une deuxième portion dite d'ancrage 20 qui est destinée à s'étendre dans une deuxième cavité réalisée dans le deuxième composant 52.

La portion de serrage 10 présente une gorge primaire 11. La gorge primaire 11 a globalement la forme d'un anneau torique, dont la section suivant un plan méridien V à la figure 2 a un contour en triangle.

En outre, l'élément d'assemblage 1 comprend un membre de guidage 30 qui présente un logement 31, dans lequel la portion de serrage 20 peut coulisser suivant l'axe de liaison X2. Dans l'exemple des figures 1 et 2, le logement 31 a une forme globalement cylindrique à base circulaire et d'axe confondu avec l'axe de liaison X2, lorsque l'élément d'assemblage 1 est à l'état monté, tel qu'illustré à la figure 2.

Le membre de guidage 30 présente aussi un trou taraudé 32 qui s'étend suivant un axe de taraudage Y32 qui est perpendiculaire à l'axe de liaison X2. Le membre de guidage 30 a une surface externe 33 qui est globalement cylindrique à base circulaire et autour de l'axe de taraudage Y32.

En outre, l'élément d'assemblage 1 comprend un élément de serrage 40 adapté pour être vissé dans le trou taraudé 32. À cet effet, l'élément de serrage 40 comprend un filetage externe. Comme le montre la figure 3, l'élément de serrage 40 présente une extrémité en saillie 41 qui a, en section suivant le plan V défini par l'axe de liaison X2 et par l'axe de taraudage Y32, une forme globalement complémentaire à la gorge primaire 11, de sorte que l'extrémité en saillie 41 pénètre dans la gorge primaire 11 au cours du vissage de l'élément de serrage 40 dans le trou taraudé 32.

L'extrémité en saillie 41 présente une symétrie de révolution autour de l'axe du taraudage X2. L'extrémité en saillie 41 a ici globalement une forme d'un cône.

Alternativement, le plan de section dans lequel est définie l'extrémité en saillie 41 peut être formé d'une direction parallèle à l'axe de liaison X2 et d'une direction parallèle à l'axe de taraudage Y32.

L'élément de serrage 40 présente une tête 42 à empreinte, l'empreinte étant de préférence formée d'un usinage cylindrique hexagonal creux (CHC).

L'élément d'assemblage 1 comprend en outre un élément déformable 45 qui est agencé sur l'organe de liaison 2 de façon à porter :
- d'une part, contre une surface de butée 22 agencée sur sur l'organe de liaison 2 pour arrêter l'élément déformable 45 en translation parallèlement à l'axe de liaison X2 ; et
- d'autre part, contre le membre de guidage 30, de sorte que l'élément déformable 45 présente une expansion (figure 2) suivant des directions dites radiales, qui sont orthogonales à l'axe de liaison X2, lorsqu'un vissage de l'élément de serrage 40 entraîne le membre de guidage 30 en translation, parallèlement à l'axe de liaison X2 et en direction de la portion d'ancrage 20.

Dans l'exemple des figures 1 à 7, la surface de butée 22 est formée par un épaulement, dont le diamètre externe est approximativement égal au diamètre externe de l'élément déformable 45. Ainsi, la surface 46 de l'élément déformable 40 destinée à porter contre le membre de guidage 30 est globalement plane lorsque l'élément déformable 45 est au repos.

Comme le montre la figure 4, l'élément déformable 45 comprend un manchon réalisé en un matériau élastomère, de préférence sélectionné dans le groupe constitué de polymère souple, d'un élastomère synthétique ou naturel, tel que le caoutchouc, le manchon étant adapté pour entourer une partie périphérique de l'organe de liaison 2 autour de l'axe de liaison X2. Dans l'exemple des figures 1 à 7, le manchon a une base circulaire et il entoure une partie cylindrique 10.1 de l'organe de liaison 2.

La portion d'ancrage 20 comprend une platine d'ancrage 23 qui est solidaire de l'organe de liaison 2 et qui est adaptée pour coulisser dans une rainure ménagée dans le deuxième composant 52, comme le montre la figure 11. La platine d'ancrage 23 est solidarisée à la portion de serrage 10 par une tige 24, laquelle a, transversalement à l'axe de liaison X2, une dimension inférieure à la platine d'ancrage 23.

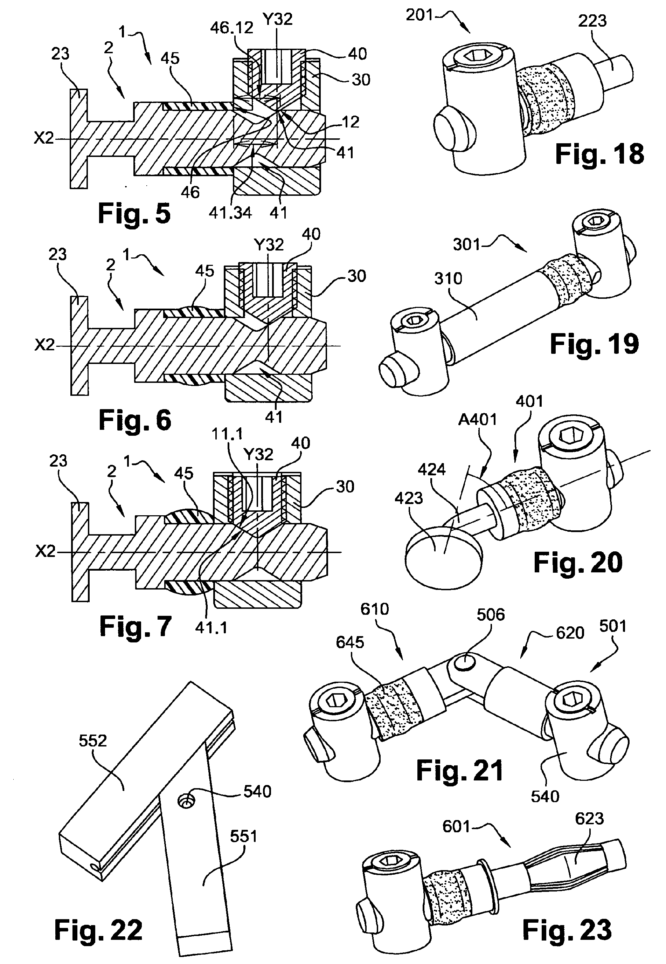

Les figures 5, 6 et 7 illustrent trois étapes du montage de l'élément d'assemblage 1. La figure 5 illustre l'élément d'assemblage à l'état desserré. La figure 6 illustre l'élément d'assemblage 1 en cours de serrage. La figure 7 illustre l'élément d'assemblage 1 à l'état serré.

Lorsque l'élément déformable 45 est au repos :
un premier écart 46.12 (matérialisé à la figure 5), mesuré parallèlement à l'axe de liaison X2, entre, d'une part, la surface 46 de l'élément déformable 45 destinée à porter contre le membre de guidage 30 et, d'autre part, le bord 12 (visible à la figure 1) de la gorge primaire 11 le plus éloigné de l'élément déformable 45
est supérieur à
un deuxième écart 41.34, mesuré parallèlement à l'axe de liaison X2, entre l'extrémité en saillie 41 et la partie 34 (visible à la figure 1) du membre de guidage 30 destinée à porter contre l'élément déformable 45.

Dans l'exemple des figures 1 à 5, le rapport ayant pour numérateur le premier écart 46.12 et pour dénominateur le deuxième écart 41.34 est d'environ 1,3.

Comme le montre la figure 7, lorsque l'élément de serrage 40 est à l'état serré en bout de course, une surface 41.1 de l'extrémité en saillie 41 porte contre une surface 11.1 de la gorge primaire 11.

Comme le montre une comparaison des figures 5, 6 et 7, l'élément déformable 40 se déforme par expansion radiale progressivement suivant le vissage de l'élément de serrage 40 dans le trou taraudé 32. Ainsi, à la figure 7, l'élément déformable 40 présente une surface externe substantiellement bombée.

De plus, l'extrémité en saillie 41 pénètre dans la gorge primaire 11 lorsque l'élément de serrage 40 a réalisé entre un et trois tours dans le trou taraudé 32.

Les figures 8 et 9 illustrent un élément d'assemblage 101 semblable à l'élément d'assemblage 1 La description de l'élément d'assemblage 1 donnée ci-avant en relation avec les figures 1 à 7 peut être transposée à l'élément d'assemblage 101, à l'exception notable des différences énoncées ci-après.

Une partie ou une pièce de l'élément d'assemblage 101 semblable ou correspondant à un élément de l'élément d'assemblage 1 porte la même référence numérique augmentée de 100. On définit ainsi un organe de liaison 102 avec un axe de liaison X102, une portion de serrage 110, une portion d'ancrage 120, un membre de guidage 130 avec un trou taraudé 132, un élément de serrage 140, un élément déformable 145, ainsi qu'un premier composant 151 et un deuxième composant 152 illustrés aux figures 14, 15, 16 et 17 et qui appartiennent à un meuble non représenté.

L'élément d'assemblage 101 diffère d e l'élément d'assemblage 1, car il comprend en outre un membre de guidage supplémentaire 130.2 et un élément de serrage supplémentaire 140.2. L'élément de serrage supplémentaire 140.2 comporte une extrémité en saillie non représentée qui est semblable à l'extrémité en saillie 41.

La portion d'ancrage 120 présentant une gorge secondaire 121.2 adaptée pour recevoir l'extrémité en saillie de l'élément de serrage supplémentaire 140.2. De plus, le membre de guidage supplémentaire 130.2 présente un logement supplémentaire 131.2 dans lequel la portion d'ancrage 120 peut coulisser suivant l'axe de liaison X102.

En service, comme le montrent les figures 10, 11, 12 et 13, l'élément d'assemblage 1 permet d'assembler le premier composant 51 et le deuxième composant 52, en formant un « L ». À cet effet, la portion de serrage 10 s'étend dans une première cavité 51.1 réalisée dans le premier composant 51 et la portion d'ancrage 20 s'étend dans une deuxième cavité 52.1 réalisée dans le deuxième composant 52.

La première cavité 51.1 est formée d'un alésage cylindrique non traversant et la deuxième deuxième cavité 52.1 est formée d'une rainure s'étendant dans suivant une direction perpendiculaire au plan de la figure 12, donc au plan méridien formé par l'axe de liaison X2 et par l'axe de taraudage Y32.

La figure 12 illustre les premier 51 et deuxième 52 composants dans leur état desserré, matérialisé par le jeu 51.52, tandis que la figure 13 illustre leur état serré.

En service, comme le montrent les figures 14, 15, 16 et 17, l'élément d'assemblage 101 permet d'assembler le premier composant 151 et le deuxième composant 152, en formant un « T ». À cet effet, la portion de serrage 110 s'étend dans une première cavité 151.1 réalisée dans le premier composant 151 et la portion d'ancrage 120 s'étend dans une deuxième cavité 152.1 réalisée dans le deuxième composant 152.

La première cavité 151.1 est formée d'un alésage cylindrique non traversant et la deuxième deuxième cavité 52.1 est aussi formée d'un alésage cylindrique non traversant.

La figure 16 illustre les premier 151 et deuxième 152 composants dans leur état desserré, matérialisé par le jeu 151.152, tandis que la figure 17 illustre leur état serré.

Les figures 18, 20 et 23 illustrent respectivement des éléments d'assemblage 201, 401 et 601 qui sont semblables à l'élément d'assemblage 1. La description de l'élément d'assemblage 1 donnée ci-avant en relation avec les figures 1 à 7 et 10 à 13 peut être transposée aux éléments d'assemblage 201, 401 et 601, à l'exception notable des différences énoncées ci-après.

L'élément d'assemblage 201 diffère de l'élément d'assemblage 1, car il comprend une tige taraudée 223, à la place de la platine 23 de la portion d'ancrage 20. tige taraudée 223 permet de fixer l'élément d'assemblage 201 dans un trou fileté non représenté, par exemple formé d'un insert en acier non représenté qui est logé dans un alésage usiné dans une pièce en bois.

L'élément d'assemblage 401 diffère de l'élément d'assemblage 1, car une face de la platine 423 est globalement plane et forme avec l'axe de liaison un angle A401 d'environ 60°. De plus, l'élément d'assemblage 401 comprend une tige 424 formant un coude.

L'élément d'assemblage 601 diffère de l'élément d'assemblage 201, car il comprend une cheville murale 623, de type moly ou autre. L'élément d'assemblage 601 permet une fixation dans un matériau minéral et dure tel que la brique pleine.

Les figures 19, 20 et 21 illustrent respectivement des éléments d'assemblage 301 et 501 qui sont semblables à l'élément d'assemblage 101. La description de l'élément d'assemblage 101 donnée ci-avant en relation avec les figures 8, 9 et 15 à 17 peut être transposée aux éléments d'assemblage 301 et 501, à l'exception notable des différences énoncées ci-après.

L'élément d'assemblage 301 1 diffère de l'élément d'assemblage 1, car il a une portion de serrage 310 qui présente une forme cylindrique allongée. L'élément d'assemblage 301 permet d'assembler deux composants dont les première et deuxième cavités ont des formes relativement longues.

L'élément d'assemblage 501 diffère de l'élément d'assemblage 1, car il comprend une articulation 506 liant la portion de serrage 610 et la portion d'ancrage 620. L'élément d'assemblage 501 comprend un seul élément déformable 645. La portion d'ancrage 620, qui n'a pas de manchon, est introduite dans le membre de guidage jusqu'à venir en butée. La gorge secondaire est alors parfaitement alignée avec l'extrémité en saillie ou pointeu. Le serrage maintient fermement la portion d'ancrage 620 dans la deuxième cavité. Puis, l'opérateur réalise l'assemblage avec la portion de serrage 610 de la même manière qu'avec la portion de serrage 10.

En service, comme le montrent la figure 22, l'élément d'assemblage 501 permet d'assembler un premier composant 551 et un deuxième composant 552 obliques, en formant un « Y ».

Selon des caractéristiques avantageuses mais facultatives de l'invention, prises isolément ou selon toute combinaison techniquement possibles :
- Le premier composant ou le deuxième composant peut être formé d'un panneau, d'une planche, d'un carrelet ou autre élément structurel composant une armature de meuble.
- Un élément d'assemblage conforme à l'invention peut aussi être appliqué pour assembler des composants de luminaire, de cloisonnement, d'objets décoratifs et de tout autre objet d'agencement domestique ou industriel.

## Revendications

1. Élément d'assemblage (1 ; 101 ; 201 ; 301 ; 401 ; 501 ; 601), par exemple pour assembler un premier composant (51 ; 151) et un deuxième composant (52 ;152) appartenant à un meuble, tels que des carrelets, l'élément d'assemblage (1 ; 101) comprenant :
- au moins un organe de liaison (2 ; 102) ayant une forme allongée suivant un axe de liaison (X2 ; X102), l'organe de liaison (2 ; 102) présentant une première portion dite de serrage (10 ; 110) destinée à s'étendre dans une première cavité réalisée dans le premier composant (51 ; 151), la portion de serrage (10 ; 110) présentant au moins une gorge primaire (11 ; 111), l'organe de liaison (2 ; 102) présentant une deuxième portion dite d'ancrage (20 ; 120) destinée à s'étendre dans une deuxième cavité réalisée dans le deuxième composant (52 ; 152) ;
- au moins un membre de guidage (30 ; 130) présentant un logement (31 ; 131), dans lequel la portion de serrage (10 ; 110) peut coulisser suivant l'axe de liaison (X2 ; X102), et un trou taraudé (32 ; 132) s'étendant suivant un axe de taraudage (Y32 ; Y132) orthogonal à l'axe de liaison (X2 ; X102), de préférence perpendiculaire à l'axe de liaison (X2 ; X102) ; et
- au moins un élément de serrage (40 ; 140) adapté pour être vissé dans le trou taraudé (32 ; 132), l'élément de serrage (40 ; 140) présentant une extrémité en saillie (41 ; 141) ayant, en section suivant un plan défini par l'axe de liaison (X2 ; X102) et par l'axe de taraudage (Y32 ; Y132), une forme globalement complémentaire à la gorge primaire (11 ; 111) de sorte que l'extrémité en saillie (41 ; 141) pénètre dans la gorge primaire (11 ; 111) au cours du vissage de l'élément de serrage (40 ; 140) dans le trou taraudé (32 ; 132) ;
l'élément d'assemblage (1 ; 101) étant **caractérisé en ce qu'**il comprend en outre au moins un élément déformable (45 ; 145) agencé sur l'organe de liaison (2 ; 102) de façon à porter d'une part, contre au moins une surface de butée (22) agencée sur l'organe de liaison (2 ; 102) pour arrêter l'élément déformable (45 ; 145) en translation parallèlement à l'axe de liaison (X2 ; X102), et d'autre part, contre le membre de guidage (30 ; 130), de sorte que l'élément déformable (45 ; 145) présente une expansion suivant des directions dites radiales, qui sont orthogonales à l'axe de liaison (X2 ; X102), lorsqu'un vissage de l'élément de serrage (40 ; 140) entraîne le membre de guidage (30 ; 130) en translation, parallèlement à l'axe de liaison (X2 ; X102) et en direction de la portion d'ancrage (20 ; 120).

2. Élément d'assemblage (1) selon la revendication 1, dans lequel la portion d'ancrage (20) comprend une platine (23) solidaire de l'organe de liaison (2) et adaptée pour coulisser dans une rainure (52.1) ménagée dans le deuxième composant (52), la platine (23) étant solidarisée à la portion de serrage (10) par au moins une tige (24).

3. Élément d'assemblage (1 ; 401) selon la revendication 2, dans lequel au moins une face de la platine (23) est globalement plane et forme avec l'axe de liaison (X2) un angle (A401) compris entre 20° et 90°, par exemple un angle de 30°, de 45°, de 60° ou de 90°.

4. Élément d'assemblage (101) selon la revendication 1, comprenant en outre un membre de guidage supplémentaire (130.2) et un élément de serrage supplémentaire (140.2), la portion d'ancrage (120) présentant au moins une gorge secondaire (121.2) adaptée pour recevoir l'extrémité en saillie (141.2) de l'élément de serrage (140.2) supplémentaire, le membre de guidage supplémentaire (130.2) présentant un logement supplémentaire (131.2) dans lequel la portion d'ancrage (120) peut coulisser suivant l'axe de liaison (X102).

5. Élément d'assemblage (1 ; 101) selon l'une des revendications précédentes, dans lequel, lorsque l'élément déformable (45 ; 145) est au repos :
un premier écart (46.12), mesuré parallèlement à l'axe de liaison (X2 ; X102), entre, d'une part, la surface (46) de l'élément déformable (45 ; 145) destinée à porter contre le membre de guidage (30 ; 130) et, d'autre part, le bord (12) de la gorge primaire (11 ; 111) le plus éloigné de l'élément déformable (45 ; 145)
est supérieur à
un deuxième écart (41.34), mesuré parallèlement à l'axe de liaison (X2 ; X102), entre l'extrémité en saillie (41 ; 141) et la partie (34) du membre de guidage (30 ; 130) destinée à porter contre l'élément déformable (45; 145).

6. Élément d'assemblage (1 ; 101) selon la revendication 5, dans lequel le rapport ayant pour numérateur le premier écart (46.12) et pour dénominateur le deuxième écart (41.34) est compris entre 1,1 et 2, de préférence entre 1,3 et 1,8.

7. Élément d'assemblage (1 ; 101) selon l'une des revendications 5 à 6, dans lequel l'extrémité en saillie (41 ; 141) pénètre dans la gorge primaire (11 ; 111) lorsque l'élément de serrage (40 ; 140) a réalisé, dans le trou taraudé (32 ; 132), un nombre de tours inférieur ou égal à trois, de préférence inférieur ou égal à deux.

8. Élément d'assemblage (1 ; 101) selon l'une des revendications précédentes, dans lequel l'organe de liaison (2 ; 102) présente une symétrie de révolution autour de l'axe de liaison (X2 ; X102).

9. Élément d'assemblage (1 ; 101) selon la revendication 8, dans lequel la surface de butée (22) est formée par un épaulement, dont le diamètre externe est approximativement égal au diamètre externe de l'élément déformable (45 ; 145).

10. Élément d'assemblage (1 ; 101) selon l'une des revendications précédentes, dans lequel l'élément déformable (45 ; 145) comprend un manchon réalisé en un matériau élastomère, de préférence sélectionné dans le groupe constitué d'un polymère souple et d'un élastomère synthétique ou naturel, tel que le caoutchouc, le manchon étant adapté pour entourer une partie périphérique de l'organe de liaison (2 ; 102).

11. Élément d'assemblage (1 ; 101) selon la revendication 10, dans lequel le manchon a une base circulaire, le manchon entourant une partie cylindrique (10.1) de l'organe de liaison (2 ; 102).

12. Élément d'assemblage (1 ; 101) selon l'une des revendications précédentes, dans lequel l'extrémité en saillie (41 ; 141) présente une symétrie de révolution autour de l'axe de taraudage (Y32 ; Y132), l'extrémité en saillie (41 ; 141) ayant de préférence une forme sélectionnée dans le groupe constitué d'un cône ou d'un tronc de cône dont le demi-angle au sommet peut être compris entre 80 degrés et 120 degrés, d'une calotte sphérique, d'une calotte ellipsoïdale, et dans lequel la gorge primaire (11 ; 111) a respectivement globalement la forme d'un anneau, de préférence d'un tore, dont la section suivant un plan méridien a un contour sélectionné dans le groupe constitué d'un triangle de forme complémentaire ou non au cône ou tronc de cône, d'un trapèze, d'un arc de cercle, d'un segment d'ellipse.

13. Élément d'assemblage (1 ; 101) selon l'une des revendications précédentes, dans lequel le membre de guidage (30 ; 130) a une surface externe (33) globalement cylindrique à base circulaire, et la surface (46) de l'élément déformable (45 ; 145) destinée à porter contre le membre de guidage (30 ; 130) est globalement plane lorsque l'élément déformable (45 ; 145) est au repos.

14. Élément d'assemblage (1 ; 101) selon l'une des revendications précédentes, dans lequel l'élément de serrage (40 ; 140) présente une tête à empreinte (42), l'empreinte étant de préférence formée d'un usinage cylindrique hexagonal creux (CHC).

15. Meuble en kit, comprenant un premier composant (51 ; 151) et un deuxième composant (52 ; 152), tels que des carrelets, et au moins un élément d'assemblage (1 ; 101) selon l'une des revendications précédentes, le premier composant (51 ; 151) et le deuxième composant (52 ; 152) étant assemblés au moyen d'un élément d'assemblage (1 ; 101) respectif, le premier composant (51 ; 151) présentant une première cavité dans laquelle peut s'étendre la portion de serrage (10 ; 110), le deuxième composant (52 ; 152) présentant une deuxième cavité dans laquelle s'étend la portion d'ancrage (20 ; 120), le premier composant (51 ; 151) présentant en outre un alésage dans lequel s'étend le membre de guidage (30 ; 130).

## Patentansprüche

1. Montageelement (1; 101; 201; 301; 401; 501; 601), beispielsweise zur Montage eines ersten Bauteils (51; 151) und eines zweiten Bauteils (52; 152), die zu einem Möbel gehören, wie Kanthölzer, wobei das Montageelement (1; 101) umfasst:
- mindestens ein Verbindungsorgan (2; 102) mit einer länglichen Form gemäß einer Verbindungsachse (X2; X102), wobei das Verbindungsorgan (2; 102) einen ersten Spannabschnitt (10; 110) aufweist, der dazu bestimmt ist, sich in einen ersten Hohlraum im ersten Bauteil (51; 151) zu erstrecken, wobei der Spannabschnitt (10; 110) mindestens einen primären Hals (11; 111) aufweist, wobei das Verbindungsorgan (2; 102) einen zweiten Verankerungsabschnitt (20; 120) aufweist, der dazu bestimmt ist, sich in einen zweiten Hohlraum im zweiten Bauteil (52; 152) zu erstrecken;
- mindestens ein Führungsglied (30; 130) mit einer Aufnahme (31; 131), wo der Spannabschnitt (10; 110) gemäß der Verbindungsachse (X2; X102) gleiten kann, und ein Gewindeloch (32; 132), das sich gemäß einer Gewindeachse (Y32; Y132) orthogonal zur Verbindungsachse (X2; X102), vorzugsweise im rechten Winkel zur Verbindungsachse (X2; X102) erstreckt, und
- mindestens ein Spannelement (40; 140), das ausgebildet ist, um in das Gewindeloch (32; 132) geschraubt zu sein, wobei das Spannelement (40; 140) ein hervorstehendes Ende (41; 141) aufweist, das im Schnitt gemäß einer Achse, die von der Verbindungsachse (X2; X102) und von der Gewindeachse (Y32; Y132) definiert wird, eine zum primären Hals (11; 111) global komplementäre Form derart hat, dass das hervorstehende Ende (41; 141) beim Schrauben des Spannelements (40; 140) im Gewindeloch (32; 132) in den primären Hals (11; 111) eindringt,
wobei das Montageelement (1; 101) **dadurch gekennzeichnet ist, dass** es ferner mindestens ein verformbares Element (45; 145) umfasst, das auf dem Verbindungsorgan (2; 102) derart ausgebildet ist, um einerseits gegen mindestens eine Anschlagfläche (22), die auf dem Verbindungsorgan (2; 102) ausgebildet ist, um das verformbare Element (45; 145) in Verschiebung parallel zur Verbindungsachse (X2; X102) und andererseits gegen das Führungsglied (30; 130) derart zu tragen, dass das verformbare Element (45; 145) eine Expansion gemäß radialen Richtungen aufweist, die orthogonal zur Verbindungsachse (X2; X102) sind, wenn ein Schrauben des Spannelements (40; 140) das Führungsglied (30; 130) in Verschiebung parallel zur Verbindungsachse (X2; X102) und in Richtung des Verankerungsabschnitts (20; 120) mitnimmt.

2. Montageelement (1) nach Anspruch 1, wobei der Verankerungsabschnitt (20) eine Platte (23) umfasst, die mit dem Verbindungsorgan (2) verbunden ist und ausgebildet, um in einer Nut (52.1) zu gleiten, die im zweiten Bauteil (52) ausgebildet ist, wobei die Platte (23) mit dem Spannabschnitt (10) anhand mindestens einer Stange (24) verbunden ist.

3. Montageelement (1; 401) nach Anspruch 2, wobei mindestens eine Seite der Platte (23) global eben ist und mit der Verbindungsachse (X2) einen Winkel (A401) zwischen 20° und 90° inklusive, beispielsweise einen Winkel von 30°, von 45°, von 60° oder von 90°, bildet.

4. Montageelement (101) nach Anspruch 1, das ferner ein zusätzliches Führungsglied (130.2) und ein zusätzliches Spannelement (140.2) umfasst, wobei der Verankerungsabschnitt (120) mindestens einen sekundären Hals (121.2) aufweist, der ausgebildet ist, um das hervorstehende Ende (141.2) des zusätzlichen Spannelements (140.2) aufzunehmen, wobei das zusätzliche Führungsglied (130.2) eine zusätzliche Aufnahme (131.2) aufweist, in der der Verankerungsabschnitt (120) gemäß der Verbindungsachse (X102) gleiten kann.

5. Montageelement (1; 101) nach einem der vorangehenden Ansprüche, wobei, wenn das verformbare Element (45; 145) in Ruhestellung ist:
ein erster Spalt (46.12), gemessen parallel zur Verbindungsachse (X2; X102), zwischen einerseits der Fläche (46) des verformbaren Elements (45; 145), die dazu bestimmt ist, gegen das Führungsglied (30; 130) zu tragen, und andererseits dem Rand (12) des primären Halses (11; 111), der am weitesten vom verformbaren Element (45; 145) entfernt ist,
größer ist als
ein zweiter Spalt (41.34), gemessen parallel zur Verbindungsachse (X2; X102), zwischen dem hervorstehenden Ende (41; 141) und dem Abschnitt (34) des Führungsglieds (30; 130), der dazu bestimmt ist, gegen das verformbare Element (45; 145) zu tragen.

6. Montageelement (1; 101) nach Anspruch 5, wobei das Verhältnis, bei dem der Zähler der erste Spalt (46.12) ist und der Nenner der zweite Spalt (41.34), zwischen 1,1 und 2 inklusive, vorzugsweise zwischen 1,3 und 1,8, ist.

7. Montageelement (1; 101) nach einem der Ansprüche 5 bis 6, wobei das hervorstehende Ende (41; 141) in den primären Hals (11; 111) eindringt, wenn das Spannelement (40; 140) im Gewindeloch (32; 132) eine Anzahl von Umdrehungen durchgeführt hat, die kleiner oder gleich drei, vorzugsweise kleiner oder gleich zwei, ist.

8. Montageelement (1; 101) nach einem der vorangehenden Ansprüche, wobei das Verbindungsorgan (2; 102) eine Umdrehungssymmetrie um die Verbindungsachse (X2; X102) aufweist.

9. Montageelement (1; 101) nach Anspruch 8, wobei die Anschlagfläche (22) von einem Absatz gebildet wird, dessen Außendurchmesser etwa gleich dem Außendurchmesser des verformbaren Elements (45; 145) ist.

10. Montageelement (1; 101) nach einem der vorangehenden Ansprüche, wobei das verformbare Element (45; 145) eine Muffe umfasst, die aus einem Elastomermaterial hergestellt ist, das vorzugsweise aus der Gruppe ausgewählt ist, die von einem elastischen Polymer und einem synthetischen oder natürlichen Elastomer wie Gummi gebildet wird, wobei die Muffe ausgebildet ist, um einen Umfangsabschnitt des Verbindungsorgans (2; 102) zu umschließen.

11. Montageelement (1; 101) nach Anspruch 10, wobei die Muffe eine kreisrunde Basis hat, wobei die Muffe einen zylindrischen Abschnitt (10.1) des Verbindungsorgans (2; 102) umschließt.

12. Montageelement (1; 101) nach einem der vorangehenden Ansprüche, wobei das hervorstehende Ende (41; 141) eine Umdrehungssymmetrie um die Gewindeachse (Y32; Y132) aufweist, wobei das hervorstehende Ende (41; 141) vorzugsweise eine Form hat, die aus der Gruppe ausgewählt ist, die von einem Kegel oder einem Kegelstumpf, dessen halber Winkel an der Spitze zwischen 80 Grad und 120 Grad inklusive sein kann, einer runden Kappe, einer elliptischen Kappe gebildet wird, und wobei der primäre Hals (11; 111) jeweils global die Form eines Rings, vorzugsweise einer Ringwulst, hat, dessen Querschnitt gemäß einer meridianer Ebene eine Kontur hat, die aus der Gruppe ausgewählt ist, die von einem Dreieck mit einer zum Kegel oder Kegelstumpf komplementären Form oder nicht, einem Trapez, einem Kreisbogen, einem Ellipsensegment gebildet wird.

13. Montageelement (1; 101) nach einem der vorangehenden Ansprüche, wobei das Führungsglied (30; 130) eine global zylindrische Außenfläche (33) mit kreisrunder Basis hat, und die Fläche (46) des verformbaren Elements (45; 145), die dazu bestimmt ist, gegen das Führungsglied (30; 130) zu tragen, global eben ist, wenn das verformbare Element (45; 145) in Ruhestellung ist.

14. Montageelement (1; 101) nach einem der vorangehenden Ansprüche, wobei das Spannelement (40; 140) einen Kopf mit einer Vertiefung (42) aufweist, wobei die Vertiefung vorzugsweise von einer hohlen achteckigen zylindrischen Ausarbeitung (CHC) gebildet wird.

15. Bausatzmöbel, das ein erstes Bauteil (51; 151) und ein zweites Bauteil (52; 152) wie Kanthölzer und mindestens ein Montageelement (1; 101) nach einem der vorangehenden Ansprüche umfasst, wobei das erste Bauteil (51 ; 151) und das zweite Bauteil (52; 152) mittels eines jeweiligen Montageelements (1; 101) montiert werden, wobei das erste Bauteil (51; 151) einen ersten Hohlraum aufweist, in den sich der Spannabschnitt (10; 110) erstrecken kann, wobei das zweite Bauteil (52; 152) einen zweiten Hohlraum aufweist, in den sich der Verankerungsabschnitt (20; 120) erstreckt, wobei das erste Bauteil (51 ; 151) ferner ein Gewinde aufweist, in das sich das Führungsglied (30 ; 130) erstreckt.

## Claims

1. An assembly element (1; 101; 201; 301; 401; 501; 601), for example to assemble a first component (51; 151) and a second component (52; 152) belonging to a piece of furniture, such as wooden sections, the assembly element (1; 101) comprising:
- at least one connecting member (2; 102) having an elongated shape along a connecting axis (X2; X102), the connecting member (2; 102) having a first so-called gripping portion (10; 110) designed to extend in a first cavity formed in the first component (51; 151), the gripping portion (10; 110) having at least one primary groove (11; 111), the connecting member (2; 102) having a second so-called anchoring portion (20; 120) designed to extend in a second cavity formed in the second component (52; 152);
- at least one guide member (30; 130) having a housing (31; 131), in which the gripping portion (10; 110) can slide along the connecting axis (X2; X102), and a tapped hole (32; 132) extending along a tapping axis (Y32; Y132) orthogonal to the connecting axis (X2; X102), preferably perpendicular to the connecting axis (X2; X102); and
- at least one gripping element (40; 140) suitable for being screwed into the tapped hole (32; 132), the gripping element (40; 140) having a protruding end (41; 141) having, in cross-section along a plane defined by the connecting axis (X2; X102) and by the tapping axis (Y32; Y132), a shape globally complementary to the primary groove (11; 111) such that the protruding end (41; 141) penetrates the primary groove (11; 111) during the screwing of the gripping element (40; 140) in the tapped hole (32; 132);
the assembly element (1; 101) being **characterized in that** it further comprises at least one deformable element (45; 145) arranged on the connecting member (2; 102) so as to bear on the one hand against at least one stop surface (22) arranged on the connecting member (2; 102) to stop the deformable element (45; 145) in translation parallel to the connecting axis (X2; X102), and on the other hand against the guide member (30; 130), such that the deformable element (45; 145) has an expansion in so-called radial directions, which are orthogonal to the connecting axis (X2; X102), when a screwing of the gripping element (40; 140) drives the guide member (30; 130) in translation, parallel to the connecting axis (X2; X102) and toward the anchoring portion (20; 120).

2. The assembly element (1) according to claim 1, wherein the anchoring portion (20) comprising a platen (23) secured to the connecting member (2) and suitable for sliding in a slot (52.1) formed in the second component (52), the platen (23) being secured to the gripping portion (10) by at least one rod (24).

3. The assembly element (1; 401) according to claim 2, wherein at least one face of the platen (23) is globally planar and forms, with the connecting axis (X2), an angle (A401) comprised between 20° and 90°, for example an angle of 30°, 45°, 60° or 90°.

4. The assembly element (101) according to claim 1, further comprising an additional guide member (130.2) and an additional gripping element (140.2), the anchoring portion (120) having at least one secondary groove (121.2) suitable for receiving the protruding end (141.2) of the additional gripping element (140.2), the additional guide member (130.2) having an additional housing (131.2) in which the anchoring portion (120) can slide along the connecting axis (X102).

5. The assembly element (1; 101) according to any one of the preceding claims, wherein, when the deformable element (45; 145) is idle:
a first gap (46.12), measured parallel to the connecting axis (X2; X102), between the surface (46) of the deformable element (45; 145) designed to bear against the guide member (30; 130) on the one hand, and the edge (12) of the primary groove (11; 111) furthest from the deformable element (45; 145) on the other hand,
is greater than
a second gap (41.34), measured parallel to the connecting axis (X2; X102), between the protruding end (41; 141) and the part (34) of the guide member (30; 130) designed to bear against the deformable element (45; 145).

6. The assembly element (1; 101) according to claim 5, wherein the ratio whereof the numerator is the first gap (46.12) and the denominator is the second gap (41.34) is comprised between 1.1 and 2, preferably between 1.3 and 1.8.

7. The assembly element (1; 101) according to any one of claims 5 to 6, wherein the protruding end (41; 141) penetrates the primary groove (11; 111) when the gripping element (40; 140) has performed, in the tapped hole (32; 132), a number of revolutions smaller than or equal to three, preferably smaller than or equal to two.

8. The assembly element (1; 101) according to any one of the preceding claims, wherein the connecting member (2; 102) has a symmetry of revolution around the connecting axis (X2; X102).

9. The assembly element (1, 101) according to claim 8, wherein the stop surface (22) is formed by a shoulder, whereof the outer diameter is approximately equal to the outer diameter of the deformable element (45; 145).

10. The assembly element (1; 101) according to any one of the preceding claims, wherein the deformable element (45; 145) comprises a sleeve made from an elastomeric material, preferably selected in the group made up of a flexible polymer and a synthetic or natural elastomer, such as rubber, the sleeve being suitable for surrounding a peripheral part of the connecting member (2; 102).

11. The assembly element (1; 101) according to claim 10, wherein the sleeve has a circular base, the sleeve surrounding a cylindrical part (10.1) of the connecting member (2; 102).

12. The assembly element (1; 101) according to any one of the preceding claims, wherein the protruding end (41; 141) has a symmetry of revolution around the tapping axis (Y32; Y132), the protruding end (41; 141) preferably having a shape selected from the group made up of a cone or a truncated cone whereof the apical half-angle can be comprised between 80 degrees and 120 degrees, of a spherical cap, of an ellipsoid cap, and wherein the primary groove (11; 111) respectively globally has the shape of a ring, preferably of a torus, whereof the cross-section along a median plane has a contour selected from the group made up of a triangle with a shape that may or may not be complementary to the cone or truncated cone, of a trapezoid, of an arc of circle, of an ellipsis segment.

13. The assembly element (1; 101) according to any one of the preceding claims, wherein the guide member (30; 130) has a globally cylindrical outer surface (33) with a circular base, and the surface (46) of the deformable element (45; 145) designed to bear against the guide member (30; 130) is globally planar when the deformable element (45; 145) is idle.

14. The assembly element (1; 101) according to any one of the preceding claims, wherein the gripping element (40; 140) has a slotted head (42), the slot preferably being formed by hollow hexagonal cylindrical (HHC) machining.

15. A furniture kit, comprising a first component (51; 151) and a second component (52; 152), such as wooden sections, and at least one assembly element (1; 101) according to any one of the preceding claims, the first component (51; 151) and the second component (52; 152) being assembled using a respective assembly element (1; 101), the first component (51; 151) having a first cavity in which the gripping portion (10; 110) can extend, the second component (52; 152) having a second cavity in which the anchoring portion (20; 120) extends, the first component (51; 151) further having a bore in which the guide member (30; 130) extends.
